# EUROPEAN PATENT SPECIFICATION

(11) **EP 0 479 477 B1**
(45) Date of publication and mention of the grant of the patent: **19.02.1997**
(21) Application number: 91308708.6
(22) Date of filing: 25.09.1991
(51) Int. Cl.: H04Q 7/20, H04Q 7/30, H04B 7/26

(54) **Distributed switching cellular communication system**
Verteiltes Vermittlungssystem für Zellular-Kommunikation
Système de commutation distribué pour communication cellulaire

(30) Priority: 01.10.1990 US 591321
(43) Date of publication of application: 08.04.1992
(73) Proprietor: AT&T Corp., New York, NY 10013-2412 (US)
(72) Inventor: Amitay, Noach, Tinton Falls, New Jersey 07724 (US)
(74) Representative: Buckley, Christopher Simon Thirsk

(56) References cited:
- DE-A- 2 625 475
- IEEE COMMUNICATIONS MAGAZINE vol. 27, no. 7, July 1989, PISCATAWAY, NJ US pages 20 - 29 STEELE 'The Cellular Environment of Lightweight Handheld Portables'
- IEEE TRANSACTIONS ON COMMUNICATIONS vol. 38, no. 8, August 1990, NEW YORK US pages 1272 - 1280 GOODMAN 'Cellular Packet Communications'

## Description

This invention relates to cellular switching systems, to base stations, and to methods of call routing.

### Background of the Invention

Mobile telephone service provides a means for telephone conversations to be originated from or terminated at, a moving vehicle or portable unit. Typically, frequency modulation (FM) radio channels are used as links between mobile units comprising wireless terminals and a mobile telephone switching office (MTSO) via base stations that serve geographically localized mobile subscribers. Furthermore, cellular techniques are presently utilized in order to enable high volume traffic to operate over a limited number of available radio channels allocated by the Federal Communications Commission (FCC). Typically, in cellular systems, by dividing large geographical areas, called cells, into smaller geographical areas or microcells, the same radio channels in different microcells may be reused.

While this new cellular architecture greatly increases the traffic volume which may be handled, sophisticated routing and switching equipment is required to maintain the integrity of each call as a subscriber moves from one cell to another. In particular, as an active subscriber moves from cell to cell, the switching system assigns a new radio frequency channel and, moreover, assigns appropriate communications resources to route signals from and to the new cell and the called party. Unfortunately, as the number of active subscribers increases dramatically and the size of the cell is further decreased in order to handle the traffic volume, a greater demand is placed on the switching architecture because of the increased frequency with which active subscribers cross cell boundaries. It is anticipated that within the next few years, the required switching capacity will become prohibitively large for existing mobile cellular switches and the associated mobile network architectures.

Various proposals have been suggested to alleviate the anticipated demand for mobile radio service. While larger cellular switches may be able to handle the increased traffic volume, they are relatively expensive and may not be readily available for short terms needs. More importantly, circuit switch architectures and network architectures of present cellular systems generally do not afford extended coverage on demand. In particular, D.J. Goodman has suggested a switching architecture which greatly relieves the switching burden due to increasing boundary crossing as cellular cells become smaller. See U.S. Patent No. 4,916.691, which is commonly assigned and incorporated herein by reference. In particular, Goodman teaches dividing a packet of information into two segments; those which change with cells as a subscriber crosses a cell boundary and those that do not change as the active subscriber moves from cell to cell. Routing procedures associated with information which do not change between cell boundaries may be stored in the memory of the switch only once, at the beginning of the call. However, routing procedures associated with the information that do change may be derived from the header of its packet received by the switch. As such, an exemplary switching architecture would comprise two separate units, one of which establishes the initial route and the other which is used to vary only that portion of the header which changes as a subscriber crosses a cell boundary. While this cellular architecture and the associated infrastructure permits rapid growth by distributing many of the switching and control functions to additional modular units which may be added as warranted by the traffic volume, it is highly desirable to mitigate the need for additional modular units, reduce the complexity of switching operations associated therewith and further reduce the switching burden on switches.

DE-A-2625475 discloses a method for automatically changing the range of radio communications for a radio telecommunications system. The system includes permanent radio telephone stations and mobile radio telephone stations. Each permanent radio telephone station is connected to the public telephone network by mobile switching centers. At least one specific duplex signaling channel and a plurality of specific duplex speechannels are assigned for signal and speech transmission. A mobile telephone station selects a first permanent radio telephone station with the best reception prior to establishing a connection. The level of HF signals received on the occupied speech channel is constantly monitored during an existing speech connection by the receiver of the mobile radio telephone station. When reception ceases to be satisfactory, a second permanent radio telephone station with the best reception conditions is then selected. The mobile radio telephone station then transmits its own identification code and the radio telephony area code of the second permanent radio telephone station to the first permanent radio telephone station through which the connection was originally made. A telephone connection is created over the public telephone network by the first permanent radio telephone station to the second permanent radio telephone station designated by the radio telephony area code. The second permanent radio telephone station assigns the mobile radio telephone station a speech channel on which the conversation can be continued.

IEEE COMMUNICATIONS MAGAZINE vol. 27 no 7, July 1989, PISCATAWAY, NJ US pages 20-29 STEELE 'The Cellular Environment of Lightweight Handheld Portables' discloses interfacing micro cells with a LAN. Micro-base stations (BSs) are connected to an optical LAN. The optical fiber connects all the BSs in a cluster to the mobile switching centre via a loop. Packet slots circulate around the loop with a bit in its header signifying whether it contains data. When a BS transmits data it waits until an empty slot arrives, marks it full, and loads it with its radio packet(s).

According to one aspect of this invention there is provided a cellular switching system as claimed in claim 1.

According to another aspect of this invention there is provided a base station as claimed in claim 6.

According to a further aspect of this invention there is provided a method as claimed in claim 9.

A new switching system and architecture which is particularly effective in addressing the problem of increased switching burden due to the increasing frequency of boundary crossings as cellular radio cells become smaller has, as an important aspect thereof, the realization that a large percentage of the switching and control functions can be distributed among base stations, which serve a number of individual subcells or microcells, as well as individual wireless terminals, i.e., subscribers. The routing procedure associated with the point of origin for a given call may be stored in the memory of the switch. As an active subscriber crosses a cell boundary, the switch forwards all packets of information for the given call to the originating cell for the duration of the call. Importantly, each subscriber informs the base station of its current location such that each base station may forward each packet to the subscriber's current base station via a high speed local area network, which interconnects each base station. In this manners the inventive architecture is unaffected by the increased crossing between cell boundaries since traffic consisting of those calls not within the range of the initial base station are placed on the local area network. As such, because subscribers continuously inform base stations of their current location and, upon subscribers movement into a new cell, base stations forward information to the subscriber's current base station, the exchange switch plays no role in the hand over process. Instead, the switching or routing associated with subscribers moving from cell to cell is accomplished in a distributed manner by each base station which is linked to one another by a local area network. Additionally, most of the hand over and switching of packets between cells over the local area network may be accomplished by real time translation or memory/bus transfer operations, which are relatively simple operations. In an embodiment of the invention, each base station is connected to other base stations via a local area network utilizing a form of digital transmission commonly known as time division multiple access (TDMA).

In a specific embodiment of the invention, clusters of microcells typically serving subscribers from fixed canisters that are mounted on lamp posts, utility poles and the like route calls from and to mobile subscribers via base stations through optical fibers. Each base station routes calls to the nearest exchange office via T1 or subscriber loop carrier (SLC) transmission lines, leaving most initial switching functions to be performed by the exchange switch. Additionally, each base station is connected to other base stations through a high transmission capacity local area network (LAN) such that calls initially routed to one base station will always be routed to that station even if the present subscriber is located within the service area of another base station. As such, routing will be established from the original base station to the current base station of the subscriber through the local area network. Thus, the local area network serves only those calls that did not remain within the range of the initial base station but moved during the duration of the call.

### Brief Description of the Drawing

A more complete understanding of the invention may be obtained by reading the following description in conjunction with the appended drawing in which:
FIG. 1 is a schematic representation of a prior art cellular telecommunications system;
FIG. 2 is a schematic representation of an embodiment of the inventive cellular communication system;
FIGs. 3 through 6 are schematic representations of hand over protocols using the inventive cellular communication system; and
FIGs.7 through 9 are schematic representations of routing by the base stations typical for the inventive cellular communications system.

### Detailed Description

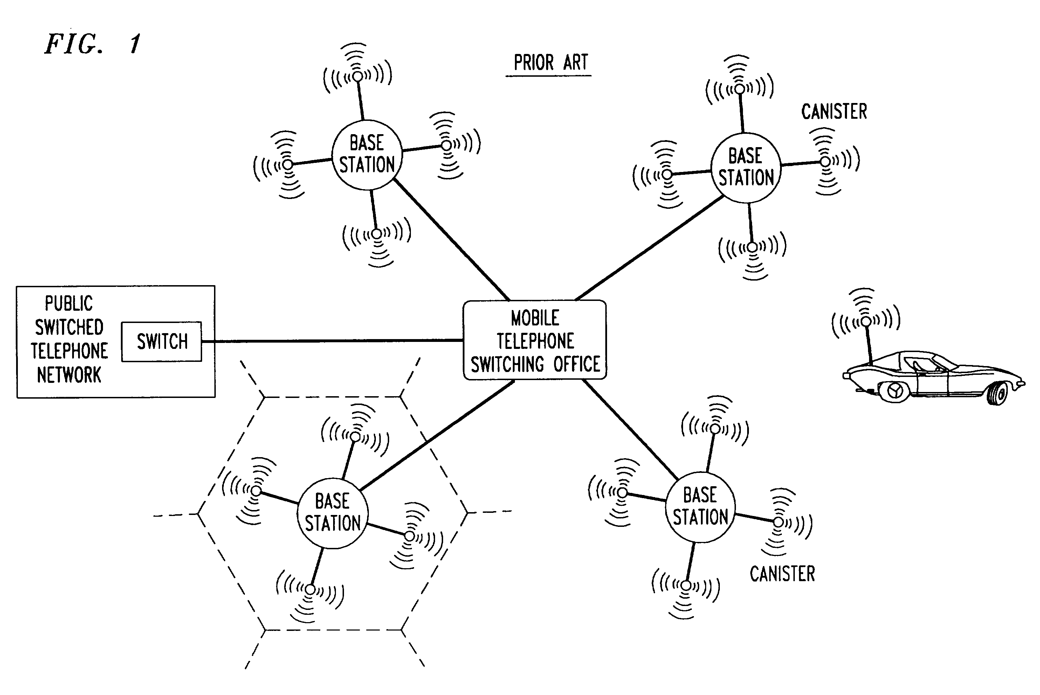

Typically, cellular systems are conceptualized as a packing of hexagonal geographical areas, or cells, each having definite and sharp boundaries between adjacent cells, as shown in FIG. 1. As cellular systems become more popular, the cells become saturated due to the presence of more active subscribers within a given cell than there are available channels, that is allocated radio frequencies or time slots. Advantageously, cellular radio has within it an inherent technique, called "cell splitting", for dealing with such an increase in subscribers. In utilizing "cell splitting", the size of the cell is reduced to smaller geographical areas, called microcells, permitting the reuse of the same radio channels in different microcells, each covering a non-interfering defined coverage area. See, for example, R. Steele et al., Proc. IEEE, Part F, Vol. 132 No. 5, pp. 396-404 (1985). As further illustrated in FIG. 1, in order to provide wireless access to public switched telephone networks (PSTNs), current cellular systems contain wireless terminals, base stations, and at least one mobile telephone switching office (MTSO). The MTSO is connected to a plurality of base stations, each which may be linked via coaxial or optical fiber lines to a plurality of canisters, which serve to transmit and receive radio signals from localized mobile subscribers defined within the boundary of a microcell. That is, radiation coverage of a given cell may be accomplished by an overlapping grid-like pattern of radiation from canisters each comprising a transducer. Accordingly, each canister communicates to mobile subscribers by way of two way radio signals to the transducers and, then to the base station, via optical fibers, coaxial cables and the like. Typically, these canisters may be mounted on lamp posts, utility poles and the like, and moreover, may utilize a lineal line-of-sight coverage of 200-2000 foot segment of roadway. Thus, these canisters act as a grid-like distributed antenna for both transmitting and receiving radio signals. The infrastructure of such a system is the combination of hardware and software that links base stations with cellular switches and cellular switches with one another as well as PSTN subscribers. See, for example, co-pending U.S. Application Serial No. 333, 490, which is commonly assigned.

As described earlier, the complexity of a cellular system is due in part to the mobility of the subscriber. In contrast to a network system for fixed subscribers, in order to establish a call, a cellular system must identify the location of the subscriber and, more importantly, must hand off the call between cells, as well as microcells, as the subscriber moves from one cell to another. As cells become smaller, the number of hand offs between cells, specifically, base station to base station, becomes prohibitively large, overwhelming the switching capacity of the cellular switch.

The inventive cellular communication system in order to increase the switching capacity of present networks exploits a distributed communication architecture to distribute and, thus, off load the switching to each base station and indirectly to each wireless terminal or subscriber. Furthermore, by connecting base stations directly to the nearest local exchange office of the PSTN via a high speed transmission line, most of the switching, other than the switching associated with cell crossings by subscribers, is handled by the local exchange office. As such, the need for any MTSO is obviated.

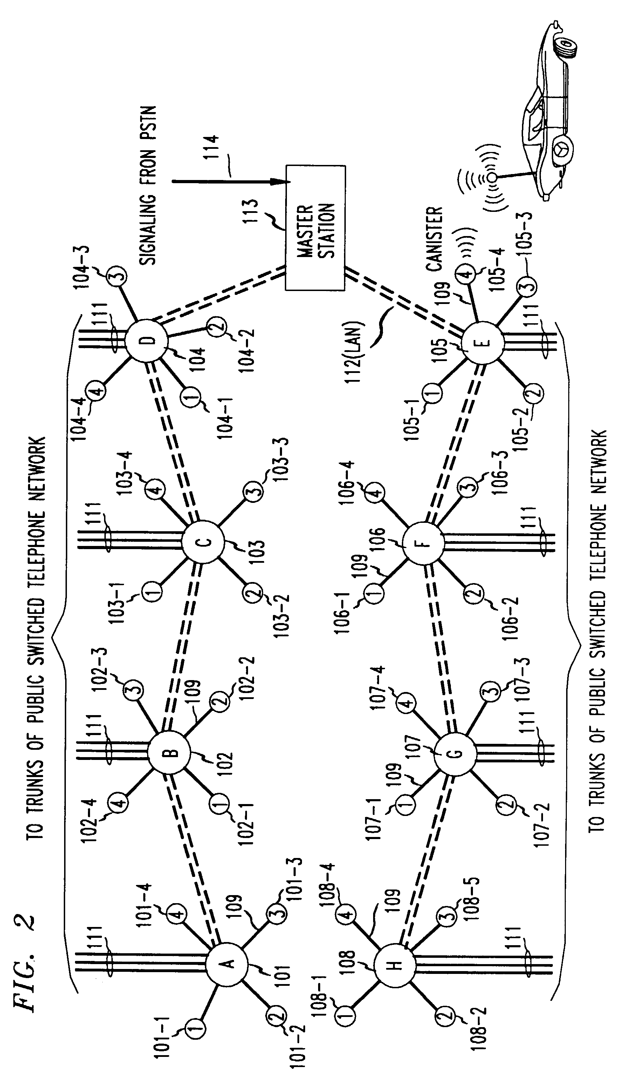

Shown in FIG. 2 is an exemplary system architecture for a mobile cellular communication system .
In addition to extending coverage to mobile subscribers, the system may serve stationary subscribers and, thus, more properly could be referred to as a "personal and microcellular communication system". While the exemplary cellular network system is described in terms of "calls", it is to be understood, however, that the term "call" as used here, and in the system depicted, includes any type of communications, such as the transmission of data, facsimile, audio, video, and the like.

As shown in FIG. 2, the exemplary mobile cellular system comprises base stations 101 through 108, each which serve a distinct geographically area or cell. Further, each base station is connected to the trunks of the public switched telephone network (PSTN). In the preferred embodiment, each base station is connected to closest exchange office for the PSTN via high transmission lines 111, for example operating at 1.544 Mbps, such as a T1 transmission line having twenty-four two-way voice channels. It is contemplated, however that a subscriber loop carrier (SLC) line handling thirty-two two-way voice channels may also be utilized. Each base station accepts and delivers information in the standard format of the PSTN. For example, the voice format may be 64 kb/s companded pulse code modulation. Furthermore, the base station converts this information to and from the format of the wireless terminal access physical layer by means such as transcoders and channel coders corresponding to the access environment of the mobile subscriber. Each base station sends packets to the appropriate canister by inspecting the packet header and, then routing the packets accordingly as indicated by a look up table.

Canisters 101-1 through 101-4, 102-1 through 102-4, etc, each comprising a transducer for communicating to and from mobile subscribers via radio signals are interconnected with their respective base station via a network of optical fibers 109. It should be noted that coaxial cables may replace optical fibers 109. From base stations, calls are sent over trunks of transmission lines 111 to exchange offices of the PSTN for subsequent routing to the called party. For ease of explanation in the proceeding description, base stations 101 through 108 have the literal designation A through F, respectively, while each canister has been numbered 1 through 4, as shown in FIG. 2.

A mobile subscriber in a given microcell by analyzing measurements of signal strength and channel availability determines the optimal microcell, that is canister, for establishing communication to the base station and, then, the called party. Importantly, for the duration of the call, the original line assignment selected on high speed transmission lines 111 is used for sending and receiving packets of information. In order to assure smooth flow of communication packets to the originally assigned line, each subscriber supplies in each of its transmitted packets his present base station and canister identification as well as his original base station and line assignment, e.g. A4/A-4T14 (current location: base station A, canister 4; original location: base station A; 14th channel assignment on one of 24 channels available on the fowth T1 transmission line). It is contemplated that communication from the subscriber to the base stations may be either analog or digital. In either case, subscribers would communicate via well-known techniques for sharing limited radio channel resources among a large number of users, such as time division multiple access (TDMA), frequency division multiplexing (FDM) and the like.

### Network Control Examples

By referring to three examples: subscriber initiated calls, hand overs between base stations and outside subscriber initiated calls, we show how the inventive cellular communication system organizes and controls the flow of subscriber information and system control information. More importantly, these examples show how the switching burden is distributed among base stations, particularly in the case for increased crossings between cell boundaries by mobile subscribers.

### Subscriber Initiated Calls

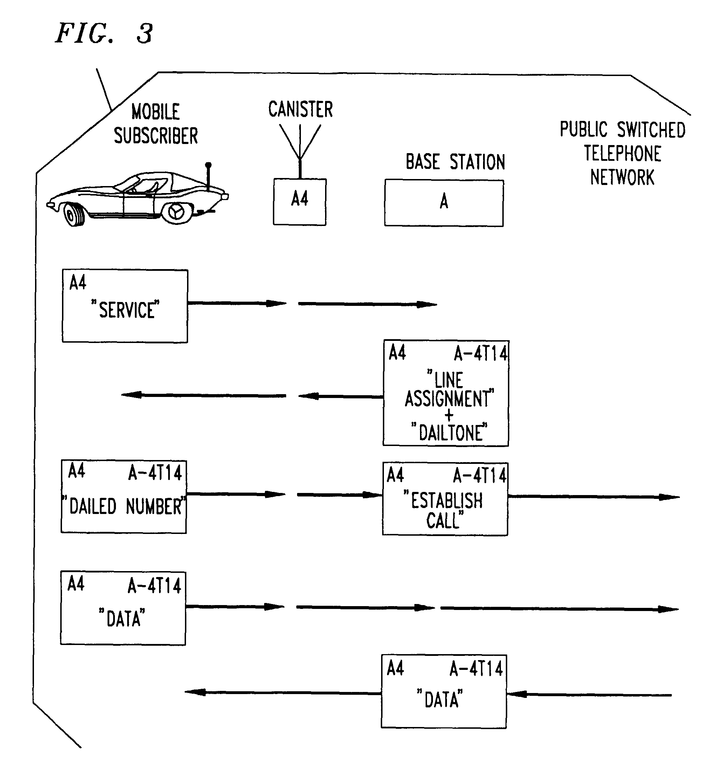

FIG. 3 shows one exemplary scenario for establishing a call set up from a mobile subscriber to a called party. It should be noted that in FIG. 3, each packet is represented by a illustrative "postcard" in which the present base station and canister identification are shown in the upper left hand of the postcard, the original base station/line assignment is shown in the upper right hand portion of the postcard, and the data or "information field" is shown in the center portion. In this figure, the horizontal direction represents location and the vertical direction represents time, with the sequence of packet transfer from top to bottom. Each packet is indicated by a rectangle.

First, the subscriber determines the optimal microcell for establishing communication to a called party based on the signal strength to the nearest canister associated with the microcell. Accordingly, the subscriber then sends to the chosen canister its current location, for example A4, designating base station A, and canister or microcell 4. Canister A4 relays the message and the identity of the subscriber to base station A via fiber 109. It is contemplated that the canister may comprise a radio frequency detector and associated circuitry to modulate a laser transmitter for transmitting optical signals to the base station. The base station uses the message received to authenticate the calling subscriber and, if the caller is authorized to place a call, assigns a line for the call, stores the base station and canister ID, and informs the canister as to its line assignment, for example 4T14 designating channel 14 on the fourth T1 transmission line 111. Additionally, the base station sends a dial tone to the subscriber as well as its assigned line trunk via canister A4. The mobile subscriber stores the assigned line in order to send in future packet its present location and given line allocation, such as A4/A-4T14, indicating: present base station A and canister 4; original base station A; and channel assignment 14 on the fourth T1 line. Further, the subscriber in response to the dial tone sends a packet containing the called party's number. This enables the base station to attempt to establish a connection through the PSTN vis-a-vis the local exchange office switch to the called party. Importantly, responses from the called party and subscriber are routed for the duration of the call through the originally chosen base station and trunk line, in this example base station A and trunk line 4T14, respectively.

As long as the subscriber remains in a single microcell, packets move from the wireless terminal to base station to the central exchange office in a straightforward manner. Typically, the bidirectional flow of speech information consists of a sequence of talk spurts, alternating in direction, with each talk spurt containing several packets. Typically, the wireless terminal through which the subscriber sends packets of information may contain a speech activity detector such that no packets are generated in the silent gaps between talk spurts.

### Hand Over Between Base Stations

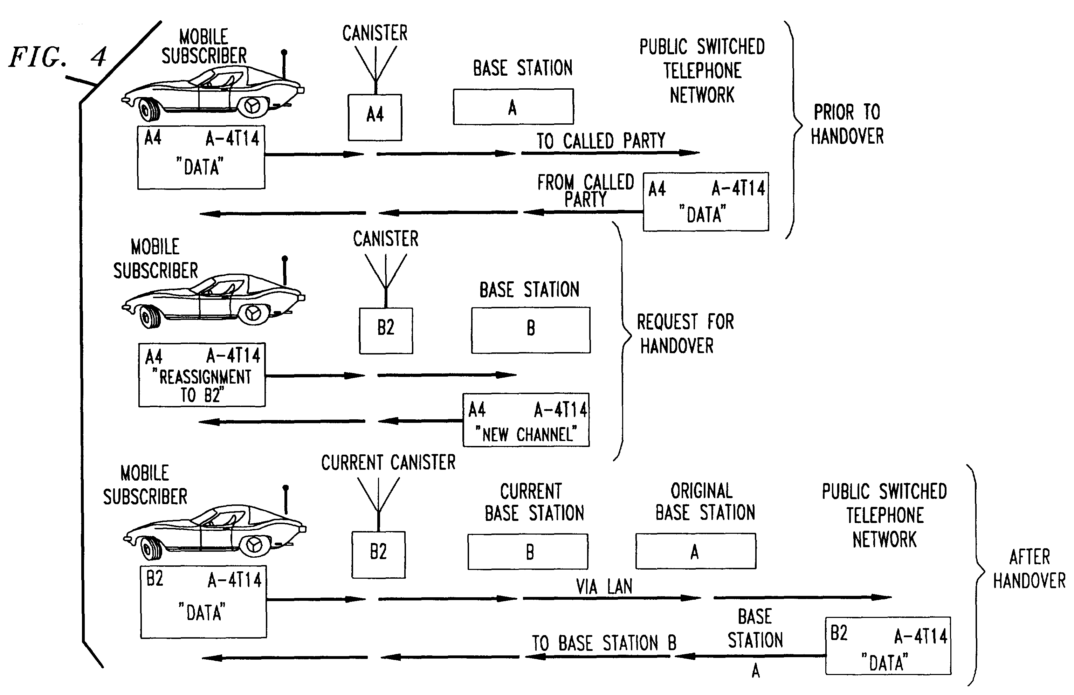

The inventive cellular communication system hands a call from one base station to another when the wireless terminal (subscriber) determines that the call can best be handled by another canister within a new base station. FIG. 4 is a schematic representation of an exemplary hand over protocol.

Initially, the terminal initiates the hand over by requesting for channel assignment in the new base station and respective canister, for example, from A4 to B2. It is should be recalled that each wireless terminal sends in its packet header its current base station and canister location as well as its previous base station location and line trunk assignment, thus off loading from the base station any resources required for tracking. Upon a request from the subscriber for channel assignment in the new base station, base station B assigns a new radio channel and informs the subscriber of the new assigned radio channel. Accordingly, the subscriber modifies it packet header for all future packets containing its present location, previous location, and assigned line. New base station B identifies all newly received packet from the subscriber and sends the packets to the original base station A via the local area network, which operates at a high transmission rate. Various local area networks are well known in the art which may be utilized and, hence, are not discussed here. When the previous base station, here station A, receives the packets, data is sent through the original assigned channel to the PSTN. Moreover, base station A updates the subscriber current location in a translational look up table to forward all received packets for the subscriber to base station B via the local area network. Because the exchange office plays no role in the hand over process, or calls from one base station to another or cell to cell, its work load is unaffected by the volume of hand overs, and thus may be extremely high.

It should be noted that the subscriber constantly monitors for the best base station and canister to communicate with the called party. If the optimum canister is within the original base station, a request is made for service from that canister. Packets from the called party are send to the same base station, but routed to a different canister by means such as packet switching based on translational look up tables, which are well-known in the art.

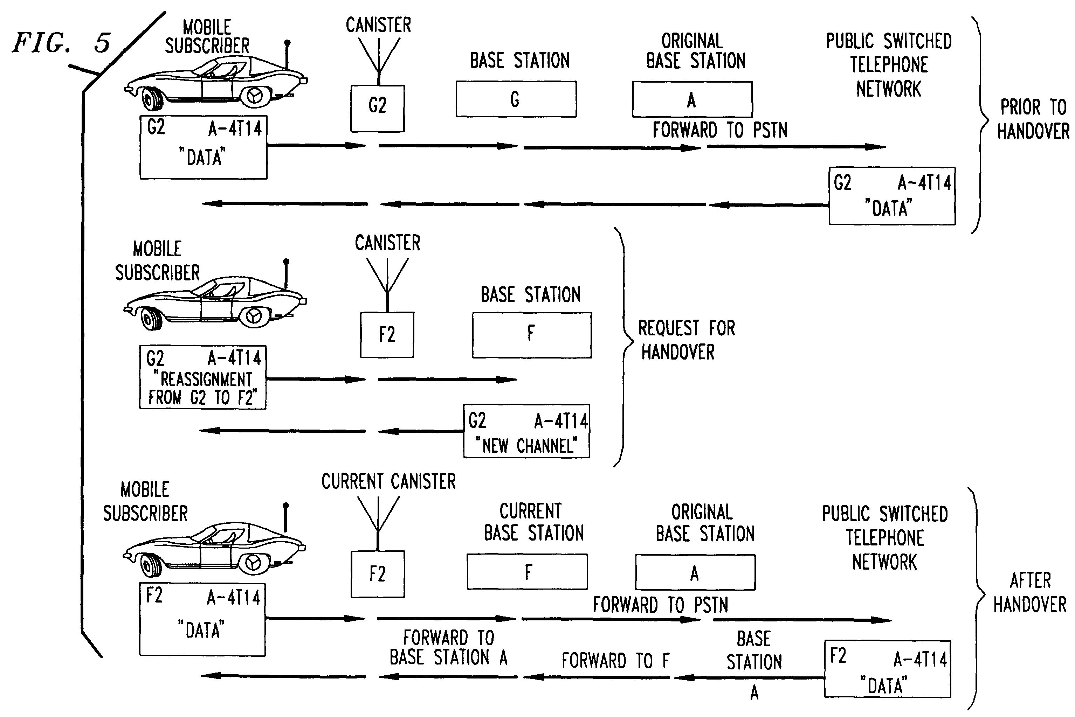

In the scenario where the change of base station is far from the original base station, such as from G2 to F2, that is, the subscriber originated the call from location A4 and is now requesting a reassignment from G2 to F2, the subscriber's request for reassignment is made to base station F. FIG. 5 is a schematic representation of an exemplary hand over protocol. Base station F informs the subscriber as to its new channel assignment such that the subscriber modifies its packet header to F2/A-4T14, indicating its current location, prior location and line assignment. Importantly, base station G stores the forwarding address, e.g. F2/A-4T14, so that packets already routed to base station G will be forwarded to base station F. Subsequently, base station G erases the prior assignment from its forwarding look up table after a certain prescribed time which is related to the size of the local area network. Packets from the mobile subscriber are sent to base station/canister F2, with base station F routing information packets to base station A via the local area network. With base station A storing the subscriber's line assignment and modifying the subscriber's current location in its look up table, base station A sends packets received from the PSTN to base station F.

### Public Subscriber Initiated Calls

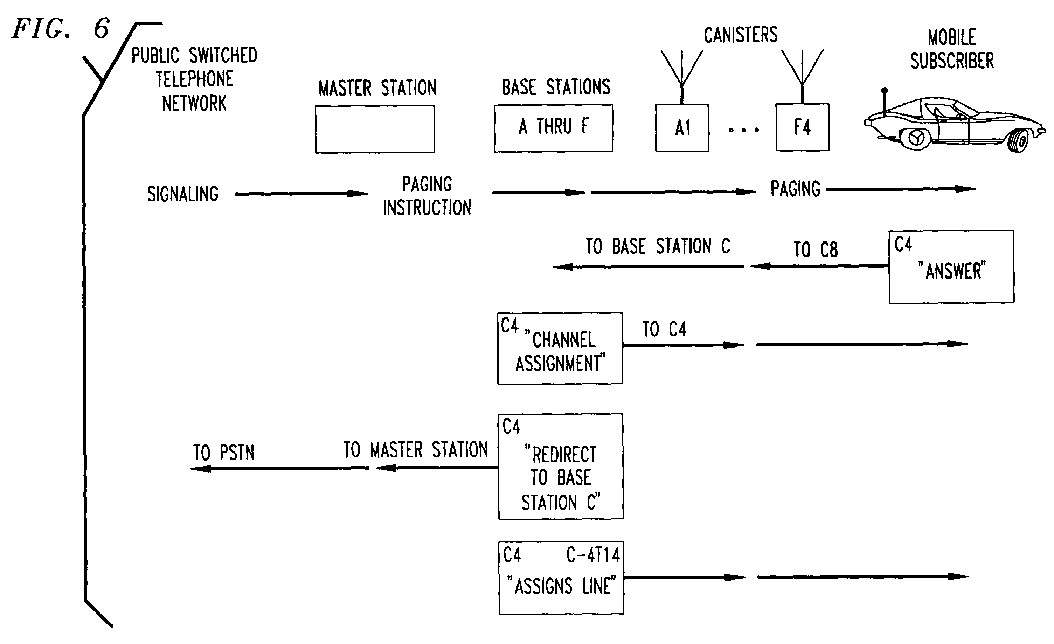

When a call is originated from an outside party to a mobile subscriber, the signaling is routed to master base station 113, as shown in FIG. 6. Master station 113 pages all base stations 101 through 108 to locate the called mobile subscriber. Upon locating the subscriber, the subscriber answers through the optimum canister, for example canister C4, and informs the base station of its current canister and base station location. The base station assigns a channel for the call and notifies master station 113 to redirect the outside signaling to the exchange office of the current subscriber's base station. The base station receives the incoming call and assign a trunk line for the call, storing the base and canister ID for subsequent resource allocation, e.g. C4/C-8T17. The base station sends a ring tone to the subscriber and its line assignment, with the subscriber storing the line assignment. As discussed above, movement from cell to cell, that is hand off from cell to cell is effectuated in a similar manner.

It should be noted that the above hand over protocols are for illustrative purposes only and various alternative protocols exist.

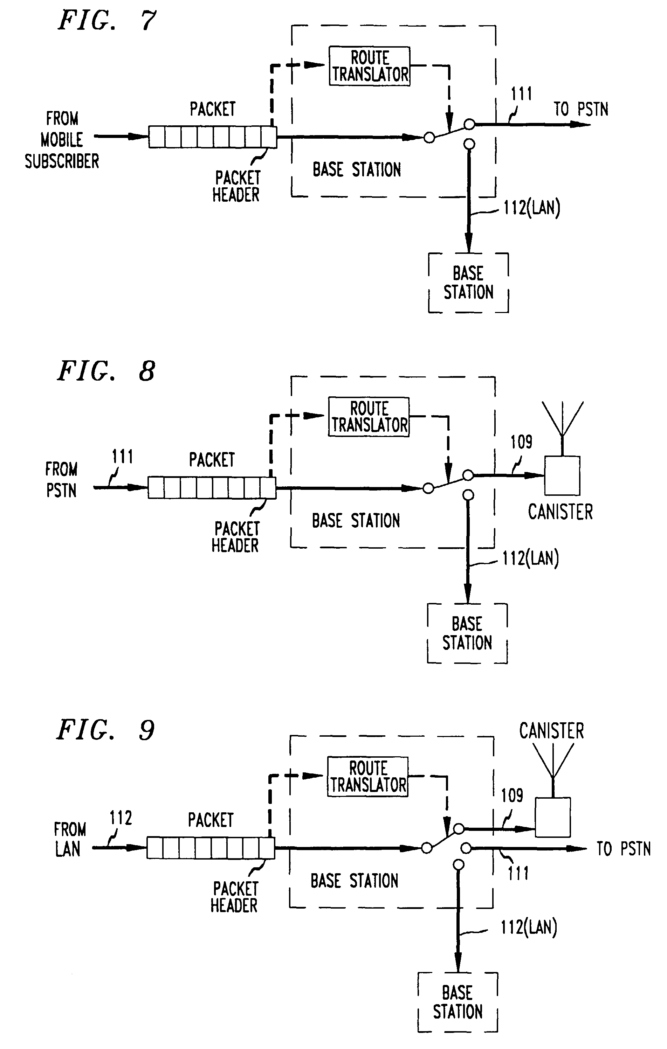

Those skilled in the art will readily note that most of the hand over procedures from base station to base station or canister to canister can be implemented with simple route translation and memory/bus transfer operations, as noted above. Shown in FIGs. 7 through 9 are exemplary routes among the PSTN, local area network, canisters and base stations for the flow of packets of information between a mobile subscriber and called party. It should be noted that information packets from subscribers are either directly routed by base stations to the PSTN or relayed to another base station by means of the local area network The address field, that is base station/canister, in each packet header provides the routing information to base stations corresponding to appropriate destination of each packet. Similarly, packets received by base stations from the PSTN are routed to appropriate canisters for communicating with the subscriber or routed via the local area network to the appropriate base station corresponding to the address field in each packet header. As described earlier, information packets send over the local area network are routed to a canister, base station or the PSTN, as shown in FIG. 8.

Although the foregoing embodiment has been described as an example with eight base stations each with four canister or microcells, the invention also is contemplated to operate with many more or less base stations and canisters.

## Claims

1. A cellular switching system for routing a call between a first subscriber and a mobile subscriber, said system comprising a plurality of base stations (101-108) each having an associated cell, each of said plurality of base stations comprising means for communicating with said mobile subscriber when said mobile subscriber is within the asociated cell of said base station, at least one of said plurality of base stations comprising means, responsive to said mobile subscriber crossing from a first cell to a second cell, for forwarding a first communication from said first subscriber to the base station associated with said second cell such that the integrity of said call is maintained as said mobile subscriber crosses from said first cell to said second cell, and CHARACTERISED BY
said at least one of said plurality of base stations comprising means for forwarding a second communication received from said mobile subscriber to the original base station that established said call between said first subscriber and said mobile subscriber such that only said original base station directly communicates with said first subscriber.

2. A system as claimed in claim 1 comprising a local area network (112) for interconnecting said plurality of base stations wherein said first and second communications among said base stations are transmitted over said local area network.

3. A system as claimed in claim 2 wherein said means for forwarding a first communication to the base station associated with said second cell comprises means, responsive to information stored in said first communication, for translating said information stored in said first communication to a first route, said first route corresponding to a transmission path to the base station associated with said second cell.

4. A system as claimed in claim 3 wherein said means for forwarding a second communication to said original base station comprises means, responsive to information stored in said second communication, for translating said information stored in said second communication to a second route, said second route corresponding to a transmission path to said original base station.

5. A system as claimed in any preceding claim wherein the cell associated with each of said plurality of base stations comprises a plurality of microcells (101-1 -- 108-4).

6. A base station (101) for use within a cellular communication system for routing a call from a first subscriber to a mobile subscriber, said mobile subscriber crossing from a first cell to a second cell, said base station having an associated first cell and comprising means for receiving a first communication from said first subscriber, means for forwarding said first communication to the base station associated with said second cell, and CHARACTERISED BY
means for receiving a second communication from the base station associated with said second cell, said second communication corresponding to communication from said mobile subscriber to said first subscriber, and means for sending said second communication to said first subscriber, said first and second communications being exchanged between said first subscriber and said mobile subscriber such that the integrity of said call is maintained as said mobile subscriber crosses from said first cell to said second cell.

7. A station as claimed in claim 6 wherein said first and second communications are sent and received over a local area network (112).

8. A station as claimed in claim 7 or 8 wherein said means for forwarding a first communication comprises means, responsive to information stored in said first communication, for translating said information stored in said first communication to a first route, said first route corresponding to a transmission path to the base station associated with said second cell.

9. A method of routing a call between a first subscriber and a mobile subscriber which is crossing from a first cell to a second cell, said method comprising the steps of sending to a first base station (101), which is associated with said first cell, a first comunication from said first subscriber, said first base station being in communication with said mobile subscriber when within said first cell, forwarding said first communication from said first base station to a second base station (102), which is associated with said second cell, when said mobile subscriber crosses from said first cell to said second cell, said second base station being in communication with said mobile subscriber when within said second cell, sending a second communication from said mobile subscriber to said second base station, and
CHARACTERISED BY
forwarding said second communication from said second base station to said first base station when said mobile subscriber crosses from said first cell to said second cell.

## Patentansprüche

1. Zellulare Vermittlungsanlage zur Leitweglenkung eines Rufs zwischen einem ersten Teilnehmer und einem Funkteilnehmer mit einer Mehrzahl von Basisstationen (101-108) jeweils mit einer zugehörigen Zelle, wobei jede der besagten Mehrzahl von Basisstationen Mittel zum Verkehren mit dem besagten Funkteilnehmer, wenn sich der besagte Funkteilnehmer innerhalb der zugehörigen Zelle der besagten Basisstation befindet, umfaßt, wobei mindestens eine der besagten Mehrzahl von Basisstationen auf das Überwechseln des besagten Funkteilnehmers von einer ersten Zelle in eine zweite Zelle reagierende Mittel zum Weiterleiten einer ersten Kommunikation vom besagten ersten Teilnehmer zu der mit der besagten zweiten Zelle verbundenen Basisstation umfaßt, so daß die Integrität des besagten Rufs erhalten bleibt, wenn der besagte Funkteilnehmer von der besagten ersten Zelle zur besagten zweiten Zelle überwechselt, und dadurch gekennzeichnet,
daß besagte mindestens eine der besagten Mehrzahl von Basisstationen Mittel zum Weiterleiten einer vom besagten Funkteilnehmer empfangenen zweiten Kommunikation zur ursprünglichen Basisstation, die den besagten Ruf zwischen dem besagten ersten Teilnehmer und dem besagten Funkteilnehmer herstellte, umfaßt, so daß nur die besagte Ursprungsbasisstation direkt mit dem besagten ersten Teilnehmer verkehrt.

2. Anlage nach Anspruch 1 mit einem Ortsnetz (112) zum Zusammenschalten der besagten Mehrzahl von Basisstationen, wobei die besagte erste und zweite Kommunikation zwischen den besagten Basisstationen über das besagte Ortsnetz übertragen werden.

3. Anlage nach Anspruch 2, wobei besagtes Mittel zum Weiterleiten einer ersten Kommunikation zu der mit der besagten zweiten Zelle verbundenen Basisstation auf in der besagten ersten Kommunikation gespeicherte Informationen reagierende Mittel zum Umsetzen der besagten in der besagten ersten Kommunikation gespeicherten Informationen in einen ersten Leitweg umfaßt, wobei der besagte erste Leitweg einem Übertragungsweg zu der mit der besagten zweiten Zelle verbundenen Basisstationen entspricht.

4. Anlage nach Anspruch 3, wobei besagtes Mittel zum Weiterleiten einer zweiten Kommunikation zur besagten Ursprungsbasisstation auf in der besagten zweiten Kommunikation gespeicherte Informationen reagierende Mittel zum Umsetzen der besagten in der besagten zweiten Kommunikation gespeicherten Informationen in einen zweiten Leitweg umfaßt, wobei der besagte zweite Leitweg einem Übertragungsweg zur besagten Ursprungsbasisstation entspricht.

5. Anlage nach einem vorhergehenden Anspruch, wobei die mit jeder der besagten Mehrzahl von Basisstationen verbundenen Zelle eine Mehrzahl von Kleinzellen (101-1--108-4) umfaßt.

6. Basisstation (101) zur Verwendung in einem zellularen Kommunikationssystem zur Leitweglenkung eines Rufs von einem ersten Teilnehmer zu einem Funkteilnehmer, wobei der besagte Funkteilnehmer von einer ersten Zelle in eine zweite Zelle überwechselt, wobei die besagte Basisstation eine zugehörige erste Zelle aufweist und Mittel zum Empfangen einer ersten Kommunikation vom besagten ersten Teilnehmer, Mittel zum Weiterleiten der besagten ersten Kommunikation zu der mit der besagten zweiten Zelle verbundenen Basisstation umfaßt und gekennzeichnet ist durch
Mittel zum Empfangen einer zweiten Kommunikation von der mit der besagten zweiten Zelle verbundenen Basisstation, wobei die besagte zweite Kommunikation einer Kommunikation vom besagten Funkteilnehmer zum besagten ersten Teilnehmer entspricht, und Mittel zum Senden der besagten zweiten Kommunikation zum besagten ersten Teilnehmer, wobei die besagten ersten und zweiten Kommunikationen so zwischen dem besagten ersten Teilnehmer und dem besagtem Funkteilnehmer ausgetauscht werden, daß die Integrität des besagten Rufs erhalten bleibt, wenn der besagte Funkteilnehmer von der besagten ersten Zelle in die besagte zweite Zelle überwechselt.

7. Station nach Anspruch 6, wobei die besagte erste und zweite Kommunikation über ein Ortsnetz (112) gesandt und empfangen werden.

8. Station nach Anspruch 7 oder 8, wobei besagtes Mittel zum Weiterleiten einer ersten Kommunikation auf in der besagten ersten Kommunikation gespeicherte Informationen reagierende Mittel zum Umsetzen der besagten in der besagten ersten Kommunikation gespeicherten Informationen in einen ersten Leitweg umfaßt, wobei der besagte erste Leitweg einem Übertragungsweg zu der mit der besagten zweiten Zelle verbundenen Basisstation entspricht.

9. Verfahren zur Leitweglenkung eines Rufs zwischen einem ersten Teilnehmer und einem Funkteilnehmer, der von einer ersten Zelle in eine zweite Zelle überwechselt, mit folgenden Schritten: Senden einer ersten Kommunikation vom besagten ersten Teilnehmer zu einer ersten Basisstation (101), die mit der besagten ersten Zelle verbunden ist, wobei die besagte erste Basisstation in Kommunikation mit dem besagten Funkteilnehmer steht, wenn er sich innerhalb der besagten ersten Zelle befindet, Weiterleiten der besagten ersten Kommunikation von der besagten ersten Basisstation zu einer zweiten Basisstation (102), die mit der besagten zweiten Zelle verbunden ist, wenn der besagte Funkteilnehmer von der besagten ersten Zelle in die besagte zweite Zelle überwechselt, wobei die besagte zweite Basisstation in Kommunikation mit dem besagten Funkteilnehmer steht, wenn er sich innerhalb der besagten zweiten Zelle befindet, Senden einer zweiten Kommunikation vom besagten Funkteilnehmer zur besagten zweiten Basisstation, und gekennzeichnet durch
Weiterleiten der besagten zweiten Kommunikation von der besagten zweiten Basisstation zur besagten ersten Basisstation, wenn der besagte Funkteilnehmer von der besagten ersten Zelle zur besagten zweiten Zelle überwechselt.

## Revendications

1. Système de commutation cellulaire pour acheminer un appel entre un premier abonné et un abonné mobile, ledit système comprenant une pluralité de stations de base (101-108) ayant chacune une cellule associée, chacune de ladite pluralité de stations de base comprenant un moyen pour communiquer avec ledit abonné mobile quand ledit abonné mobile est à l'intérieur de la cellule associée de ladite station de base, au moins une de ladite pluralité de stations de base comprenant un moyen, sensible au passage par ledit abonné mobile d'une première cellule à une deuxième cellule, pour renvoyer une première communication provenant dudit premier abonné à la station de base associée à ladite deuxième cellule de telle sorte que l'intégrité dudit appel soit maintenue quand ledit abonné mobile passe de ladite première cellule à ladite deuxième cellule, et CARACTERISE PAR
ladite au moins une de ladite pluralité de stations de base comprenant un moyen pour renvoyer une deuxième communication reçue dudit abonné mobile à la station de base d'origine qui a établi ledit appel entre ledit premier abonné et ledit abonné mobile de telle sorte que seule ladite station de base d'origine communique directement avec ledit premier abonné.

2. Système tel que revendiqué à la revendication 1, comprenant un réseau local (112) pour interconnecter ladite pluralité de stations de base dans lequel lesdites première et deuxième communications parmi lesdites stations de base sont transmises sur ledit réseau local.

3. Système tel que revendiqué à la revendication 2, dans lequel ledit moyen de renvoi d'une première communication à la station de base associée à ladite deuxième cellule comprend un moyen, sensible aux informations stockées dans ladite première communication, pour acheminer lesdites informations stockées dans ladite première communication sur une première route, ladite première route correspondant à un chemin de transmission vers la station de base associée à ladite deuxième cellule.

4. Système tel que revendiqué à la revendication 3, dans lequel ledit moyen de renvoi d'une deuxième communication à ladite station de base d'origine comprend un moyen, sensible aux informations stockées dans ladite deuxième communication, pour acheminer lesdites informations stockées dans ladite deuxième communication sur une deuxième route, ladite deuxième route correspondant à un chemin de transmission vers ladite station de base d'origine.

5. Système tel que revendiqué dans l'une quelconque des revendications précédentes, dans lequel la cellule associée à chacune de ladite pluralité de stations de base comprend une pluralité de microcellules (101-1 --108-4).

6. Station de base (101) destinée à être utilisée dans un système de commutation cellulaire pour acheminer un appel provenant d'un premier abonné vers un abonné mobile, ledit abonné mobile passant d'une première cellule à une deuxième cellule, ladite station de base ayant une première cellule associée et comprenant un moyen pour recevoir une première communication dudit premier abonné, un moyen pour renvoyer ladite première communication à la station de base associée à ladite deuxième cellule, et CARACTERISEE PAR
un moyen pour recevoir une deuxième communication provenant de la station de base associée à ladite deuxième cellule, ladite deuxième communication correspondant à la communication provenant dudit abonné mobile vers ledit premier abonné, et un moyen pour envoyer ladite deuxième communication audit premier abonné, lesdites première et deuxième communications étant échangées entre ledit premier abonné et ledit abonné mobile de telle sorte que l'intégrité dudit appel soit maintenue quand ledit abonné mobile passe de ladite première cellule à ladite deuxième cellule.

7. Station tel que revendiquée à la revendication 6, dans laquelle lesdites première et deuxième communications sont envoyées et reçues sur un réseau local (112).

8. Station tel que revendiquée à la revendication 7 ou 8, dans laquelle ledit moyen de renvoi d'une première communication comprend un moyen, sensible aux informations stockées dans ladite première communication, pour acheminer lesdites informations stockées dans ladite première communication sur une première route, ladite première route correspondant à un chemin de transmission vers la station de base associée à ladite deuxième cellule.

9. Procédé d'acheminement d'un appel entre un premier abonné et un abonné mobile qui passe d'une première cellule à une deuxième cellule, ledit procédé comprenant les étapes d'envoi à une première station de base (101), laquelle est associée à ladite première cellule, d'une première communication provenant dudit premier abonné, ladite première station de base étant en communication avec ledit abonné mobile quand il est à l'intérieur de ladite première cellule, de renvoi de ladite première communication depuis ladite première station de base vers une deuxième station de base (102), laquelle est associée à ladite deuxième cellule, quand ledit abonné mobile passe de ladite première cellule à ladite deuxième cellule, ladite deuxième station de base étant en communication avec ledit abonné mobile quand il se trouve à l'intérieur de ladite deuxième cellule, d'envoi d'une deuxième communication provenant dudit abonné mobile à ladite deuxième station de base, et
CARACTERISE PAR
le renvoi de ladite deuxième communication provenant de ladite deuxième station de base à ladite première station de base quand ledit abonné mobile passe de ladite première cellule à ladite deuxième cellule.
